# EUROPÄISCHE PATENTSCHRIFT

(11) **EP 0 501 150 B1**
(45) Veröffentlichungstag und Bekanntmachung des Hinweises auf die Patenterteilung: **15.06.1994**
(21) Anmeldenummer: 92101335.5
(22) Anmeldetag: 28.01.1992
(51) Int. Cl.: B60D 1/48, B60R 19/26

(54) **Kraftfahrzeug mit einer Anhängevorrichtung**
Motor vehicle with a towing device
Véhicule automobile comportant un dispositif d'attelage

(30) Priorität: 31.01.1991 DE 4102911
(43) Veröffentlichungstag der Anmeldung: 02.09.1992
(73) Patentinhaber: AUDI AG, 85045 Ingolstadt (DE)
(72) Erfinder: Leitermann, Wulf, W-7107 Bad Wimpfen (DE); Wätzold, Peter, W-8071 Wettstetten (DE); Zavojan, Anton, W-7101 Offenau (DE); Konrad, Günter, W-6927 Bad Rappenau (DE)

(56) Entgegenhaltungen:
- DE-A- 2 607 394
- DE-U- 6 608 416
- US-A- 4 468 052

## Beschreibung

Die Erfindung bezieht sich auf ein Kraftfahrzeug entsprechend dem Oberbegriff des Anspruchs 1.

Bei einem Kraftfahrzeug der gattungsgemäßen Art (DE-C-2607 394) sind die Befestigungsvorrichtungen von senkrechten, an den Enden der Längsträger angeschweißten Flanschen gebildet, die sowohl zur Abstützung der Pralldämpfer als auch zur Anbringung der Quertraverse der Anhängevorrichtung dienen. Dabei ist die Quertraverse der Anhängevorrichtung mit zwei Längsstreben versehen, die sich in die Längsträger erstrecken, und die Pralldämpfer des Stoßfängers sind zumindest teilweise in den rohrförmigen Längsstreben der Anhängevorrichtung angeordnet. Ein Nachteil dieser bekannten Ausführung besteht darin, daß das Erscheinungsbild des Kraftfahrzeuges unterschiedlich ist, je nachdem, ob eine Anhängevorrichtung vorgesehen ist oder nicht, da mit Anhängevorrichtung der Stoßfänger weiter nach hinten von der Karosserie vorsteht als ohne Anhängevorrichtung. Um dies zu vermeiden, müssen Pralldämpfer unterschiedlicher Länge verwendet werden.

Ein weiteres Problem bei der Befestigung der Anhängevorrichtung mit den gleichen Schrauben, mit denen die Pralldämpfer befestigt sind, besteht darin, daß die Quertraverse der Anhängevorrichtung im Gegensatz zum Stoßfänger sehr biegesteif ausgeführt sein muß, um die in der Mitte der Quertraverse angreifende Zugkraft ohne Verformung aufnehmen zu können. Dadurch können Fertigungstoleranzen im Abstand der Längsträger voneinander, die einige Millimeter betragen können, das Anbringen der Anhängevorrichtung erschweren.

Aus dem DE-U- 81 19 447 ist eine Anhängevorrichtung bekannt, die eine Quertraverse, bestehend aus einem Mittelteil und zwei Seitenteilen sowie an den äußeren Enden der Seitenteile angebrachten Längsstreben aufweist, die an den einander zugewandten Seitenflächen der Längsträger des Fahrzeuges angeschraubt werden. Zur Erleichterung der Handhabung, der Lagerhaltung und des Versandes sind die Seitenteile teleskopartig mit dem Mittelteil durch Schrauben verbunden. Abgesehen von der aufwendigen Herstellung einer derartigen Anhängevorrichtung läßt sich ein Toleranzausgleich von wenigen Millimetern nur durch Anordnung von Beilagscheiben zwischen den Längsstreben und den Längsträgern durchführen. Auch bei dieser Ausführung verändert sich das Erscheinungsbild des Kraftfahrzeuges, wenn eine Anhängevorrichtung vorgesehen wird, da der Stoßfänger an der Anhängevorrichtung angebracht wird, ohne daß unterschiedliche Pralldämpfer verwendet werden müssen.

Der Erfindung liegt die Aufgabe zugrunde, ein Kraftfahrzeug der gattungsgemäßen Art zu schaffen, dessen Erscheinungsbild durch eine Anhängevorrichtung nicht verändert wird.

Diese Aufgabe wird erfindungsgemäß dadurch gelöst, daß jede Befestigungsvorrichtung eine im wesentlichen senkrechte Flanschfläche zur Abstützung der Pralldämpfer und eine im wesentlichen waagrechte, sich unterhalb des Längsträgers erstreckende Flanschfläche zur Befestigung der Quertraverse der Anhängevorrichtung aufweist.

Da bei dem erfindungsgemäßen Vorschlag die Quertraverse der Anhängevorrichtung nicht zwischen dem Stoßfänger und den Enden der Längsträger zu liegen kommt, bleibt die Lage des Stoßfängers bei Anbringung der Anhängevorrichtung unverändert. Der erfindungsgemäße Vorschlag ermöglicht auch ein einfaches Nachrüsten der Anhängevorrichtung, ohne daß Arbeiten an der Karosserie (Bohren, Schweißen, Lackieren) vorgenommen werden müssen.

Der Ausgleich von Fertigungstoleranzen im Abstand zwischen den Enden der Längsträger kann auf einfache Weise durch die im Anspruch 2 angegebenen Merkmale vorgenommen werden.

Mit den Merkmalen des Anspruchs 6 können die Befestigungsvorrichtungen weitere Funktionen erfüllen, so daß der Aufbau der Karosserie insgesamt vereinfacht wird.

Ein Ausführungsbeispiel der Erfindung wird im folgenden unter Bezugnahme auf die Zeichnungen beschrieben. Es zeigt:
- Fig. 1: eine perspektivische Ansicht des Heckteils eines Kraftfahrzeuges, wobei die Anhängevorrichtung und der Stoßfänger in auseinandergezogenem Zustand dargestellt sind,
- Fig. 2: eine perspektivische Darstellung einer Befestigungsvorrichtung,
- Fig. 3: einen Schnitt entlang Linie 3-3 in Fig. 1 mit dem Pralldämpfer und der Anhängevorrichtung im montierten Zustand, und
- Fig. 4: einen Schnitt entlang Linie 4-4 in Fig. 3.

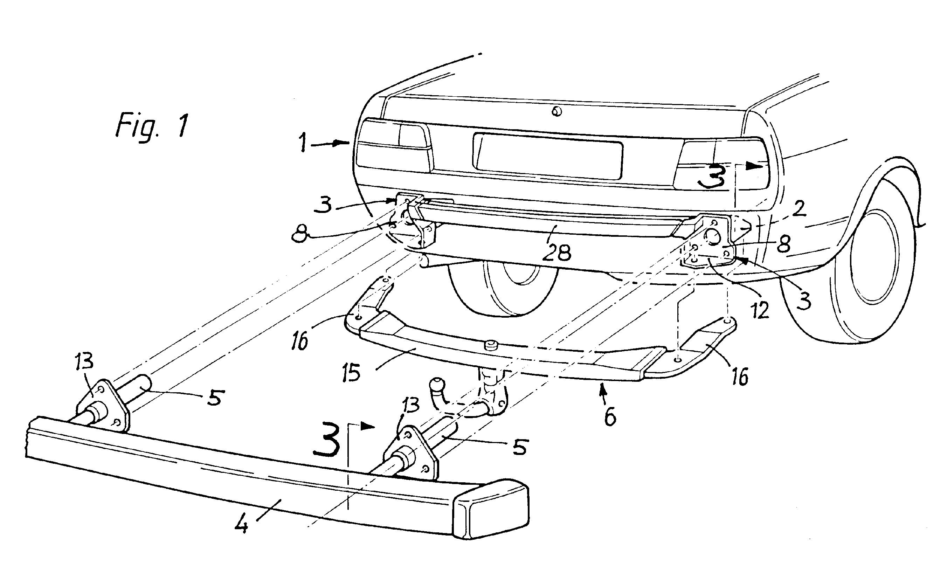

In Fig. 1 ist mit 1 das Heckteil eines Personenkraftwagens bezeichnet, das Karosserie-Längsträger 2 mit nach hinten offenen Enden aufweist, an denen Befestigungsvorrichtungen 3 zur Anbringung eines Stoßfängers 4 mit Pralldämpfern 5 und einer Anhängevorrichtung 6 vorgesehen sind.

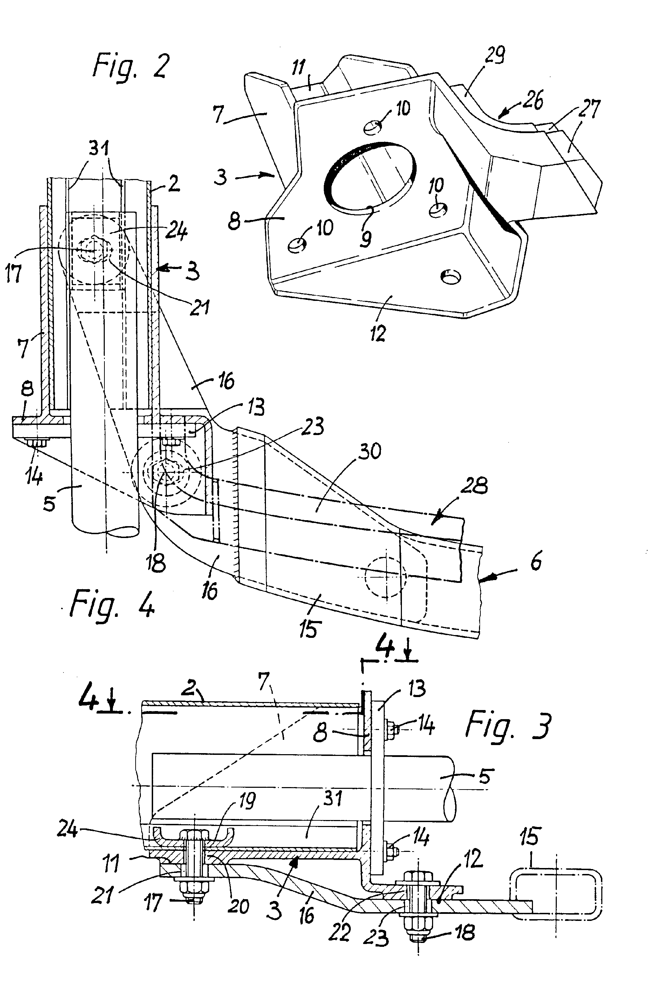

Eine Befestigungsvorrichtung 3 ist perspektivisch und in größerem Maßstab in Fig. 2 dargestellt. Sie weist einen im Querschnitt U-förmigen Grundkörper 7 auf, der, wie aus Fig. 3 und 4 ersichtlich ist, den Längsträger 2 umgreift und mit diesem verschweißt ist. Die Befestigungsvorrichtung 3 weist einen im wesentlichen senkrechten Flansch 8 mit einem großen Loch 9 zum Durchführen des Pralldämpfers 5 sowie mit Löchern 10 zum Durchführen der Befestigungsschrauben 14 des Pralldämpfers 5 auf. Außerdem hat die Befestigungsvorrichtung 3 im wesentlichen waagrechte Flanschflächen 11, 12, von denen die Flanschfläche 11 von dem Steg des U-förmigen Grundkörpers 7 gebildet ist und die Flanschfläche 12 etwas gegenüber der Flanschfläche 11 nach unten versetzt an den senkrechten Flansch 8 anschließt.

Wie aus Figuren 3 und 4 ersichtlich ist, wird der Befestigungsflansch 13 des Pralldämpfers 5 mittels Schrauben 14 an den senkrechten Flansch 8 der Befestigungsvorrichtung 3 angeschraubt. Die Anhängevorrichtung 6 weist eine Quertraverse 15 auf, von deren Enden Längsstege 16 ausgehen, die durch Schrauben 17 und 18 an die Flanschfläche 11 bzw. 12 angeschraubt sind. Die Schraube 17 erstreckt sich durch Löcher 19, 20 in der Wand des Längsträgers 2 und in dem waagrechten Flansch 11 und durch ein Loch 21 im Längssteg 16 der Anhängevorrichtung. Die Schraube 18 erstreckt sich durch entsprechende Löcher 22 und 23 in dem waagrechten Flansch 12 und im Längssteg 16. Um Fertigungstoleranzen im Abstand der Längsträger voneinander auffangen zu können, sind die Löcher 19, 20 und/oder 21 und die Löcher 22 und/oder 23 in Fahrzeugquerrichtung um so viel größer als der Durchmesser der Schrauben 17, 18, daß auch bei ungünstigsten Toleranzen eine problemlose Befestigung der Anhängevorrichtung 6 sichergestellt ist. Zu diesem Zweck sind die Löcher 21 und 23 im Ausführungsbeispiel als Langlöcher ausgebildet.

Die Schrauben 17, 18 können alternativ auch zur Anbringung einer Abschleppöse verwendet werden.

Im Ausführungsbeispiel ist die Schraube 17 an einer Halteplatte 24 mit hochstehenden Rändern angeschweißt, die sich zwischen Längsrippen 31 des Längsträgers 2 erstreckt (s. Fig. 4) und dadurch die Schraube 17 gegen Verdrehung sichert. Eine axiale Sicherung der Schraube 17 erfolgt durch den in den Längsträger 2 eingeschobenen Pralldämpfer 5, wie dies in Fig. 3 gezeigt ist.

Außer dem U-förmigen Grundkörper 7 und den Flanschen 8 und 12 ist jede Befestigungsvorrichtung mit einem Ansatz 26 (Fig. 2) versehen, der zurückgesetzte Anschlußflächen 27 für einen rohrförmigen Querträger 28 und eine Auflagefläche 29 für eine nicht gezeigte Reserveradmulde aufweist, die sich in einer Fläche 30 am Querträger 28 fortsetzt.

Vorzugsweise sind die Befestigungsvorrichtungen 3 von einem Leichtmetall-Gußteil gebildet.

## Patentansprüche

1. Kraftfahrzeug mit rückwärtigen, nach hinten offenen Längsträgern (2) und mit einem Stoßfänger (4) mit Pralldämpfern (5), die zumindest teilweise in die Längsträger (2) hineinragen, wobei die Längsträger (2) an ihren rückwärtigen Enden jeweils mit einer Befestigungsvorrichtung (3) versehen sind, an denen sich die Pralldämpfer (5) abstützen und an denen eine Anhängevorrichtung (6) anbringbar ist,
**dadurch gekennzeichnet,**
daß jede Befestigungsvorrichtung (3) einen im wesentlichen senkrechten Flansch (8) zur Abstützung des Pralldämpfers (5) und einen im wesentlichen waagrechten, sich unterhalb des Längsträgers (2) erstreckenden Flansch (11) zur Befestigung der Anhängevorrichtung (6) aufweist.

2. Kraftfahrzeug nach Anspruch 1, dadurch gekennzeichnet, daß die Längsträger (2), die waagrechten Flansche (11) der Befestigungsvorrichtungen (3) und die Anhängevorrichtung (6) miteinander fluchtende Löcher (19, 20 bzw. 21) zur Durchführung von Schrauben (17) für die Befestigung der Anhängevorrichtung (6) aufweisen, wobei die Löcher in den Längsträgern und in den waagrechten Flanschen oder die Löcher in der Anhängevorrichtung in Fahrzeugquerrichtung um so viel größer sind als der Durchmesser der Schrauben (17), so daß Toleranzen im Abstand der Längsträger (2) voneinander aufgenommen werden.

3. Kraftfahrzeug nach Anspruch 2, dadurch gekennzeichnet, daß die Schrauben (17) drehfest in den Längsträgern (2) angeordnet und durch die in die Enden der Längsträger eingeführten Pralldämpfer (5) axial gesichert sind.

4. Kraftfahrzeug nach den Ansprüchen 1 und 2, dadurch gekennzeichnet, daß jede Befestigungsvorrichtung (3) einen zweiten, sich nach rückwärts erstreckenden waagrechten Flansch (12) aufweist, an dem die Anhängevorrichtung (6) zusätzlich anschraubbar ist.

5. Kraftfahrzeug nach Anspruch 2 oder 4, dadurch gekennzeichnet, daß die Schrauben (17, 18) alternativ zur Anbringung von Abschleppösen verwendbar sind.

6. Kraftfahrzeug nach Anspruch 1, dadurch gekennzeichnet, daß die Befestigungsvorrichtungen (3) die Längsträger (2) U-förmig umfassen und Anschlußflächen (27) für einen Karosserie-Querträger (28) sowie Auflageflächen (29) für eine Reserveradmulde aufweisen.

7. Kraftfahrzeug nach einem der vorhergehenden Ansprüche, dadurch gekennzeichnet, daß die Befestigungsvorrichtungen (3) von Leichtmetall-Gußteilen gebildet sind.

## Claims

1. Motor vehicle with rear longitudinal members (2), which are open at the back, and with a bumper (4) with shock absorbers (5), which project at least partly into the longitudinal members (2), the longitudinal members (2) being provided at their rear ends with a respective mounting device (3) at which the shock absorbers (5) are supported and to which a trailer coupling (6) can be attached, characterised in that each mounting device (3) comprises an essentially vertical flange (8) for supporting the shock absorber (5) and an essentially horizontal flange (11), which extends underneath the longitudinal member (2), for mounting the trailer coupling (6).

2. Motor vehicle according to claim 1, characterised in that the longitudinal members (2), the horizontal flanges (11) of the mounting devices (3) and the trailer coupling (6) comprise aligned holes (19, 20 and 21) for passing through screws (17) for mounting the trailer coupling (6), the holes in the longitudinal members and in the horizontal flanges or the holes in the trailer coupling being larger in the transverse direction of the vehicle than the diameter of the screws (17) such that tolerances in the spacing of the longitudinal members (2) are absorbed.

3. Motor vehicle according to claim 2, characterised in that the screws (17) are arranged in the longitudinal members (2) in a non-rotatable manner and are axially secured by the shock absorbers (5), which are inserted in the ends of the longitudinal members.

4. Motor vehicle according to claims 1 and 2, characterised in that each mounting device (3) comprises a second, horizontal flange (12), which extends backwards and to which the trailer coupling (6) can additionally be screwed.

5. Motor vehicle according to claim 2 or 4, characterised in that the screws (17, 18) may alternatively be used to attach towing eyes.

6. Motor vehicle according to claim 1, characterised in that the mounting devices (3) embrace the longitudinal members (2) in the form of a U and comprise joining surfaces (27) for a cross-member (28) of the body and bearing surfaces (29) for a spare wheel recess.

7. Motor vehicle according to one of the preceding claims, characterised in that the mounting devices (3) are formed by cast light-metal parts.

## Revendications

1. Véhicule automobile, comprenant des longerons (2) postérieurs ouverts vers l'arrière, et un pare-chocs (4) avec des amortisseurs de chocs (5) qui dépassent au moins en partie dans les longerons (2), les longerons (2) étant munis à chacune de leurs extrémités postérieures, de dispositifs de fixation (3) sur lesquels prennent appui les amortisseurs de chocs (5) et sur lesquels peut être monté un dispositif d'attelage (6), **caractérisé en ce** que chaque dispositif de fixation (3) comprend une bride (8) sensiblement verticale pour le soutien de l'amortisseur de chocs (5) et une bride (11) sensiblement horizontale pour la fixation du dispositif d'attelage (6), qui s'étend au-dessous du longeron (2).

2. Véhicule automobile selon la revendication 1, caractérisé en ce que le longeron (2), les brides horizontales (11) des dispositifs de fixation (3) et le dispositif d'attelage (6) présentent des trous (19, 20 et respectivement 21) alignés les uns avec les autres et servant au passage de vis (17) pour la fixation du dispositif d'attelage (6), les trous dans les longerons et dans les brides horizontales ou les trous dans le dispositif d'attelage étant plus grands, dans la direction transversale du véhicule, que le diamètre des vis (17), de façon à compenser des tolérances dans l'écartement des longerons (2).

3. Véhicule automobile selon la revendication 2, caractérisé en ce que les vis (17) sont disposées dans les longerons (2) de manière à être bloquées en rotation et bloquées dans le sens axial par les amortisseurs de chocs (5) engagés dans les extrémités des longerons.

4. Véhicule automobile selon l'une des revendications 1 et 2, caractérisé en ce que chaque dispositif de fixation (3) comporte une seconde bride (12) horizontale qui s'étend vers l'arrière et qui offre un point de vissage supplémentaire pour le dispositif d'attelage (6).

5. Véhicule automobile selon l'une des revendications 2 ou 4, caractérisé en ce que les vis (17, 18) peuvent également être utilisées pour le montage d'anneaux de remorquage.

6. Véhicule automobile selon la revendication 1, caractérisé en ce que les dispositifs de fixation (3) enveloppent les longerons (2) en forme de U et comportent des surfaces de raccordement (27) pour une traverse de carrosserie (28) ainsi que des surfaces d'appui (29) pour un logement de roue de secours.

7. Véhicule automobile selon l'une des revendica- tions précédentes, caractérisé en ce que les dispositifs de fixation (3) sont constitués par des pièces moulées en métal léger.
